# EUROPÄISCHE PATENTANMELDUNG

(11) **EP 1 958 754 A1**
(43) Veröffentlichungstag der Anmeldung: **20.08.2008**
(21) Anmeldenummer: 07123421.5
(22) Anmeldetag: 18.12.2007
(51) Int. Cl.: B29C 45/67, B29C 45/68

(54) **Antriebsvorrichtung, insbesondere für ein bewegbares Bauteil an einer Kunststoffspritzgieß- oder einer Blasformmaschine**

(30) Priorität: 14.02.2007 DE 102007007288
(71) Anmelder: Robert Bosch GmbH, 70184 Stuttgart (DE)
(72) Erfinder: Dantlgraber, Jörg, 97816 Lohr am Main (DE)
(74) Vertreter: Thürer, Andreas

(57) **Zusammenfassung**

Die Erfindung geht aus von einer Antriebsvorrichtung, insbesondere für ein bewegbares Bauteil an einer Blasformmaschine Eine bekannte Antriebsvorrichtung umfasst eine erste Kolben-Zylinder-Einheit mit einem ersten Hydraulikkolben, der mit einer ersten Wirkfläche einen mit Druckflüssigkeit gefüllten ersten Zylinderraum begrenzt und an dem das bewegbare Bauteil verbunden ist, eine zweite Kolben-Zylinder-Einheit mit einem zweiten Hydraulikkolben, der mit einer zweiten Wirkfläche einen zweiten mit Druckflüssigkeit gefüllten Zylinderraum begrenzt, und eine dritte Kolben-Zylinder-Einheit mit einem dritten Hydraulikkolben, der mit einer dritten Wirkfläche einen dritten mit Druckflüssigkeit gefüllten Zylinderraum begrenzt und dessen Wirkfläche wesentlich kleiner als die erste Wirkfläche ist. Mit einem Ventil ist eine fluidische Verbindung zwischen dem zweiten Zylinderraum und dem ersten Zylinderraum steuerbar ist, wobei für einen Stellhub des bewegbaren Bauteils bei offenem Ventil Druckflüssigkeit aus dem zweiten Zylinderraum und dem dritten Zylinderraum in den ersten Zylinderraum und für die Ausübung einer großen Kraft auf das bewegbare Bauteil (Krafthub) bei geschlossenem Ventil Druckflüssigkeit nur aus dem dritten Zylinderraum in den ersten Zylinderraum verdrängt wird.

Der Erfindung liegt die Aufgabe zugrunde, eine solche Antriebsvorrichtung so weiterzuentwickeln, dass der zweite Hydraulikkolben direkt ohne eine Kupplungsvorrichtung mitgenommen werden kann und damit eine massive und geringem Verschleiß unterworfene Bauweise möglich ist.

Dies wird dadurch erreicht, dass ein Druckflüssigkeitsausgleichsbehälter vorhanden ist und dass mit einem Ventil eine fluidische Verbindung zwischen dem zweiten Zylinderraum und dem Druckflüssigkeitsausgleichsbehälter steuerbar ist.

## Beschreibung

Die Erfindung betrifft eine Antriebsvorrichtung, die insbesondere zum Bewegen eines Bauteils an einer Kunststoffspritzgieß- oder einer Blasformmaschine verwendet werden soll und die die Merkmale aus dem Oberbegriff des Patentanspruchs 1 aufweist.

Zum Beispiel bewegt die Antriebsvorrichtung innerhalb der Schließeinheit einer Kunststoffspritzgießmaschine die bewegliche Formaufspannplatte der Maschine. Eine solche Antriebsvorrichtung hat zwei wichtige unterschiedliche Forderungen zu erfüllen. Zum einen soll sie die Formaufspannplatte zum Schließen und zum Öffnen der Form möglichst schnell verfahren, damit die Zykluszeit für die Herstellung eines Formstücks klein gehalten werden kann. Zum andern soll sie die Formaufspannplatte und damit die ganze Form gegen den hohen Spritzdruck mit großer Kraft zuhalten können. Zum einen sind also Stellbewegungen mit hoher Geschwindigkeit auszuführen, zum andern sind ohne wesentliche Bewegung hohe Kräfte auszuüben. Derartige Anforderungen können sich außer bei der Schließeinheit auch bei den Auswerfern oder der Einspritzeinheit einer Kunststoffspritzgießmaschine stellen. Zum Beispiel wird beim Einspritzen von Kunststoff in die Form die Plastifizierschnecke mit relativ hoher Geschwindigkeit in Richtung auf die Form zu bewegt, bis die Form vollständig mit Kunststoff gefüllt ist. Wird im Anschluss daran die sich in der Form befindliche Kunststoffschmelze einem so genannten Nachdruck ausgesetzt, so muss der Antrieb eine hohe Kraft ohne wesentliche Bewegung der Plastifizierschnecke aufbringen. Auch bei Blasformmaschine sind Bewegungen im Eilgang und Krafthub möglich.

Eine Antriebsvorrichtung mit den Merkmalen aus dem Oberbegriff des Patentanspruchs 1 ist aus der DE 101 35 516 A1 bekannt. Bei dieser Antriebsvorrichtung ist mit dem bewegbaren Bauteil ein als Differenzkolben ausgebildeter Hydraulikkolben einer ersten Kolben-Zylinder-Einheit mechanisch verbunden. Dieser erste Hydraulikkolben begrenzt mit einer ersten Wirkfläche einen mit Druckflüssigkeit gefüllten ersten Zylinderraum. Es ist eine zweite Kolben-Zylinder-Einheit vorhanden, die einen zweiten ebenfalls als Differenzkolben ausgebildeten Hydraulikkolben aufweist, der mit einer zweiten Wirkfläche einen zweiten mit Druckflüssigkeit gefüllten Zylinderraum begrenzt. Schließlich ist eine dritte Kolben-Zylinder-Einheit vorhanden, die einen dritten ebenfalls als Differenzkolben ausgebildeten Hydraulikkolben aufweist, der mit einer dritten Wirkfläche einen dritten mit Druckflüssigkeit gefüllten Zylinderraum begrenzt. Die dritte Wirkfläche ist wesentlich kleiner als die erste Wirkfläche am ersten Hydraulikkolben. Mit einem 2/2 Wegventil kann die fluidische Verbindung zwischen dem zweiten Zylinderraum und dem ersten Zylinderraum gesteuert werden.

Für eine Eilgangbewegung des zu bewegenden Bauteils ist das 2/2 Wegeventil offen. Der zweite und der dritte Hydraulikkolben werden vom Elektromotor im Sinne eines Verdrängens von Druckflüssigkeit aus dem zweiten Zylinderraum und aus dem dritten Zylinderraum in den ersten Zylinderraum verschoben. Dabei wird der zweite Hydraulikkolben vom Elektromotor über eine Kupplung bewegt, die als zwischen dem zweiten Hydraulikkolben und einem Mitnehmer eingespannte Feder oder als schaltbare Magnetkupplung ausgebildet ist. Für die Ausübung einer großen Kraft auf das bewegbare Bauteil wird das 2/2 Wegeventil geschlossen. Die Bewegungskoppelung zwischen dem zweiten Hydraulikkolben und dem Elektromotor wird gelöst. Dieser verschiebt nur noch den dritten Hydraulikkolben weiter, wobei im ersten Zylinderraum und im dritten Zylinderraum ein hoher Druck aufgebaut werden kann. Bei einer Weguntersetzung erhält man dabei eine Kraftübersetzung.

Der Erfindung liegt die Aufgabe zugrunde, eine Antriebsvorrichtung, die die Merkmale aus dem Oberbegriff des Patentanspruchs 1 aufweist, so weiterzuentwickeln, dass der zweite Hydraulikkolben direkt ohne eine Kupplungsvorrichtung mitgenommen werden kann und damit eine massivere und geringerem Verschleiß unterworfene Bauweise möglich ist.

Das gesetzte Ziel wird dadurch erreicht, dass die Antriebsvorrichtung erfindungsgemäß neben den Merkmalen aus dem Oberbegriff auch die Merkmale aus dem kennzeichnenden Teil des Patentanspruchs 1 aufweist. Bei einer solchen Antriebsvorrichtung wird der zweite Hydraulikkolben nicht nur im Eilhub, sondern auch im Krafthub mitbewegt. Es sind ein Druckflüssigkeitsausgleichsbehälter vorhanden ist und ein Ventil vorhanden, mit dem eine fluidische Verbindung zwischen dem zweiten Zylinderraum und dem Druckflüssigkeitsausgleichsbehälter steuerbar ist. Im Eilhub ist das Ventil geschlossen und das Ventil zwischen dem zweiten Zylinderraum und dem ersten Zylinderraum offen. Die aus dem zweiten Zylinderraum verdrängte Druckflüssigkeit gelangt mit derjenigen aus dem dritten Zylinderraum in den ersten Zylinderraum, so dass der erste Hydraulikkolben mit hoher Geschwindigkeit bewegt wird. Für die Stellbewegung des bewegbaren Bauteils ist üblicherweise nur eine geringe Kraft notwendig, so dass die Wirkfläche des zweiten Hydraulikkolbens im Bereich der Größe der Wirkfläche des ersten Hydraulikkolbens liegen oder sogar größer sein kann und die Wegstrecke, die das Ausgangselement der elektromotorischen Antriebseinheit während der Stellbewegung zurückzulegen hat, etwa dem Weg des bewegbaren Bauteils entspricht. Zum Ausüben der hohen Kraft wird der zweite Zylinderraum fluidisch vom ersten Zylinderraum getrennt und mit dem Druckflüssigkeitsausgleichsbehälter verbunden. Ein hoher Druck baut sich nur im ersten und im dritten Zylinderraum auf, so dass dieser hohe Druck nicht auf den zweiten Hydraulikkolben und damit auch nicht auf das Ausgangselement des elektromotorischen Antriebs wirken kann.

Es sei hier darauf hingewiesen, dass in den Patentansprüchen zwar von einer Bewegung eines Hydraulikkolbens gesprochen wird, dass damit aber immer eine relative Bewegung zwischen einem Hydraulikkolben und dem entsprechenden Zylindergehäuse gemeint ist, die auch dadurch erreicht werden kann, dass der Hydraulikkolben ortsfest zum Maschinengestell angeordnet ist und das Zylindergehäuse relativ zum Maschinengestell bewegt wird.

Außerdem sei darauf hingewiesen, dass die dritte Kolben-Zylinder-Einheit eine solche sein kann, dass sie von der ersten Kolben-Zylinder-Einheit augenfällig zu unterscheiden ist. Erste und dritte Kolben-Zylinder-Einheit können jedoch auch weitgehend ineinander integriert sein. So kann der dritte Hydraulikkolben als Plungerkolben in den ersten Zylinderraum hineinragen. Dieser ist dann auch als dritter Zylinderraum zu betrachten. Als drittes Zylindergehäuse könnte der zur Führung und Abdichtung des dritten Hydraulikkolbens dienende Teil des ersten Zylindergehäuses betrachtet werden.

Vorteilhafte Ausgestaltungen einer erfindungsgemäßen Antriebsvorrichtung kann man den Unteransprüchen entnehmen.

Jede Kolben-Zylinder-Einheit kann sich aus mehreren mechanisch und fluidisch parallel zueinander angeordneten Teileinheiten zusammensetzen

Die Kolben-Zylinder-Einheiten sind gemäß den Patentansprüchen 3 und 4 vorteilhafterweise Differentialeinheiten, besitzen also Hydraulikkolben, die als Differenzkolben einander gegenüberliegende Wirkflächen unterschiedlicher Größe und insbesondere nur eine Kolbenstange haben. Die Kolben-Zylinder-Einheiten können dadurch dass sie doppeltwirkend sind auch zum Rückzug des beweglichen Bauteils benutzt werden. Entsprechen die Flächenverhältnisse den Angaben gemäß Patentanspruch 5, so kann die erste Kolben-Zylinder-Einheit mit Einspannung betrieben werden. Bei einem Betrieb mit Einspannung ist das Druckniveau in den Zylinderräumen erhöht und die Steifigkeit des Antriebs ist höher.

Vorteilhafterweise ist gemäß Patentanspruch der zweite ringförmige Zylinderraum über ein Ventil mit einem Druckflüssigkeitsausgleichsbehälter verbindbar. Bei geschlossenem Ventil kann somit unabhängig vom Druck im Druckflüssigkeitsausgleichsbehälter ein anderer Druck im zweiten ringförmigen Zylinderraum und auch im ersten und im dritten Zylinderraum herrschen.

Gemäß Patentanspruch 7 ist der zweite Zylinderraum über ein Ventil mit einem ersten Druckflüssigkeitsausgleichsbehälter und der zweite, ringförmige Zylinderraum über ein Ventil mit einem zweiten Druckflüssigkeitsausgleichsbehälter verbindbar ist.

Bevorzugt sind, wie in Patentanspruch 8 angegeben, vorhandene Druckflüssigkeitsausgleichsbehälter als Hydrospeicher ausgebildet. Der hydraulische Teil der Antriebsvorrichtung bildet dann ein geschlossenes System. Mehrere, gemäß Patentanspruch 7 vorhandene und als Hydrospeicher ausgebildete Druckflüssigkeitsausgleichsbehälter können auf unterschiedliche Drücke aufgeladen sein, wodurch sich für die Differentialeinheiten ein einfacher Betrieb unter Einspannung ergibt.

Vorteilhafterweise ist gemäß Patentanspruch 9 zwischen dem ersten ringförmigen Zylinderraum und dem zweiten ringförmigen Zylinderraum ein Ventil angeordnet, mit dem die beiden Zylinderräume gegeneinander absperrbar sind. Das Ventil ist während des Krafthubs geschlossen, so dass im ersten ringförmigen Zylinderraum ein anderer Druck als im zweiten ringförmigen Zylinderraum herrschen kann.

Wenn nach Patentanspruch 10 wenigstens ein Teil der Fluidverbindungen durch 2/2 Wegeventile gesteuert werden, so können diese Fluidverbindungen völlig unabhängig voneinander und flexibel nach dem gewünschten betrieblichen Ablauf gesteuert werden.

Bei einer Ausbildung der Hydraulikkolben als doppelwirkende Hydraulikkolben werden in den Zylinderräumen beidseits eines Hydraulikkolbens unterschiedliche Drück auftreten. Man hat dadurch Leckage über den Hydraulikkolben. Bei einem Betrieb mit Einspannung und Ausbildung der Hydraulikkolben als Differenzkolben kann im Mittel der höhere Druck in den kolbenstangenseitigen Zylinderräumen auftreten. Es wird eine innere Leckage in die kolbenstangenabseitigen Zylinderräume erfolgen. Dadurch werden der zweite und der dritte Hydraulikkolben während des Betriebs im Sinne einer allmählichen Verkleinerung der kolbenstangenseitigen Zylinderräume driften. Um eine Drift durch innere Leckage wieder ausgleichen zu können, sind gemäß Patentanspruch 11 über eine Ventilanordnung die beiden Zylinderräume zu den beiden Seiten des zweiten Hydraulikkolbens und die beiden Zylinderräume zu den beiden Seiten des dritten Hydraulikkolbens fluidisch miteinander verbindbar sind. Dazu ist neben den schon erwähnten Ventilen lediglich noch ein Ventil notwendig, über das die beiden Zylinderräume der ersten Kolben-Zylinder-Einheit miteinander verbunden werden können.

Je nach der Größe der Leckage kann man nun die Maschine vor Inbetriebnahme zum Beispiel einmal am Tag oder einmal in der Woche einstellen. Dazu wird das zu bewegende Bauteil in eine bestimmte Position gebracht, vorzugsweise bis gegen einen mechanischen Anschlag gefahren. Anschließend wird die Ventilanordnung in den Zustand gebracht, in dem die Zylinderräume zu beiden Seiten des zweiten und des dritten Hydraulikkolbens miteinander verbunden sind. Dann können diese Hydraulikkolben in die der bestimmten Position des zu bewegenden Bauteils entsprechende Position gebracht werden. Dann wird die Ventilanordnung wieder in ihre Sperrstellung geschaltet.

Mehrere Ausführungsbeispiele einer erfindungsgemäßen Antriebsvorrichtung sind in den Zeichnungen dargestellt. Anhand dieser Zeichnungen wird die Erfindung nun näher erläutert.

Es zeigen
- Figur 1: das erste Ausführungsbeispiel, bei dem der erste Hydraulikkolben, der zweite Hydraulikkolben und der dritte Hydraulikkolben als Differenzkolben mit einer Kolbenstange ausgebildet sind und die kolbenstangenseitigen, ringförmigen Zylinderräume der drei Kolben- Zylinder-Einheiten dauernd fluidisch miteinander verbinden sind,
- Figur 2: ein zweites Ausführungsbeispiel, bei dem zwischen dem kolbenstangenseitigen Zylinderraum am ersten Hydraulikkolben und dem kolbenstangenseitigen Zylinderraum am zweiten Hydraulikkolben ein Ventil angeordnet ist, und
- Figur 3: ein drittes Ausführungsbeispiel, bei dem der kolbenstangenabseitige Zylinderraum an einer ersten Hydrospeicher und der kolbenstangenseitige, ringförmige Zylinderraum der zweiten Kolben-Zylinder-Einheit.

Gemäß den Figuren besitzen die gezeigten Antriebsvorrichtungen eine erste Kolben-Zylinder-Einheit 10, eine zweite Kolben-Zylinder-Einheit 11 und eine dritte Kolben-Zylinder-Einheit 12. Die Einheiten haben ein gemeinsames Gehäuse 13, das gestellfest angeordnet ist. Zur Kolben-Zylinder-Einheit 12 gehört ein erster Hydraulikkolben 14 mit einer aus dem Gehäuse herausragenden Kolbenstange 15, die zum Beispiel an der verschiebbaren Formtragplatte einer Blasformmaschine befestigt ist. Der Hydraulikkolben 14 ist also ein Differenzkolben, der einen ersten kreiszylindrischen Hohlraum im Gehäuse 13 in einen kolbenstangenabseitigen, im Querschnitt kreiszylindrischen Zylinderraum 16 und einen auf der Seite der Kolbenstange befindlichen (kolbenstangenseitigen), ringförmigen Zylinderraum 17 aufteilt. An den Zylinderraum 16 grenzt der Hydraulikkolben 14 mit einer kreisscheibenförmigen Wirkfläche 18 und an den Zylinderraum mit einer ringförmigen Wirkfläche 19 an. Beide Zylinderräume sind mit Druckmittel gefüllt. Zum Verfahren der Formtragplatte 10 in Richtung Schließen der Form wird ein flüssiges Druckmittel, wie zum Beispiel Mineralöl, dem Zylinderraum 16 und zum Verfahren der Formtragplatte 10 in Richtung Öffnen dem Zylinderraum 17 zugeführt und aus dem jeweils anderen Zylinderraum verdrängt.

Die Zufuhr und die Verdrängung von Druckmittel erfolgt von und zu den zwei weiteren Kolben-Zylinder-Einheiten, nämlich der zweiten Kolben-Zylinder-Einheit 11 und einer dritten Kolben-Zylinder-Einheit 12. Die Kolben-Zylinder-Einheit 11 besitzt einen zweiten als Differenzkolben ausgebildeten Hydraulikkolben 25, der in einem zweiten Hohlraum des Gehäuses 13 axial beweglich ist, mit dem eine aus dem Gehäuse 13 abgedichtet herausragende Kolbenstange 26 verbunden ist und der das Innere des zweiten Hohlraums abgedichtet in einen im Querschnitt kreiszylindrischen Zylinderraum 27 und einen auf der Seite der Kolbenstange 26 befindlichen ringförmigen Zylinderraum 28 aufteilt. An den Zylinderraum 27 grenzt der Hydraulikkolben 25 mit einer kreisscheibenförmigen Wirkfläche 29 und an den Zylinderraum 28 mit einer ringförmigen Wirkfläche 30 an. Die Mittelachse des zweiten Hohlraums, des zweiten Hydraulikkolbens 25 und der Kolbenstange 26 stehen senkrecht auf der Mittelachse des ersten Hydraulikkolbens.

Die dritte Kolben-Zylinder-Einheit 12 setzt sich aus zwei Teileinheiten 12a und 12b zusammen, die sich bezüglich der Kolben-Zylinder-Einheit 12 diametral gegenüberliegen. Jede Teileinheit besitzt einen dritten als Differenzkolben ausgebildeten Hydraulikkolben 35a, 35b, der in einem jeweiligen dritten Teilhohlraum des Gehäuses 13 axial beweglich ist, mit dem eine aus dem Gehäuse 13 abgedichtet herausragende Kolbenstange 36a, 36b verbunden ist und der das Innere eines dritten Teilhohlraums abgedichtet in einen im Querschnitt kreiszylindrischen Zylinderraum 37a, 37b und einen auf der Seite der Kolbenstange 36a, 36b befindlichen ringförmigen Zylinderraum 38a, 38b aufteilt.

Im Folgenden seien die Hydraulikkolben 35a, 35b, die Kolbenstangen 36a, 36b und die Zylinderräume 37a, 37b und 38a, 38b jeweils wie ein einziger Hydraulikkolben 35, eine einzige Kolbenstange 36 und ein einziger Zylinderraum 37 und ein einziger Zylinderraum 38 betrachtet.

An den Zylinderraum 37 grenzt der Hydraulikkolben 35 mit einer kreisscheibenförmigen Wirkfläche 39 und an den Zylinderraum 38 mit einer ringförmigen Wirkfläche 40 an. Die Mittelachse des dritten Hohlraums, des dritten Hydraulikkolbens 35 und der Kolbenstange 36 verläuft parallel zur Mittelachse der zweiten Kolben-Zylinder-Einheit. Die Wirkfläche 39 des dritten Hydraulikkolbens 35 ist wesentlich kleiner als die Wirkfläche 18 des ersten Hydraulikkolbens 14. Ebenso ist die Wirkfläche 40 wesentlich kleiner als die Wirkfläche 19. Die Wirkfläche 29 des zweiten Hydraulikkolbens 25 ist etwa so groß wie oder deutlich größer als die Wirkfläche 18 des Hydraulikkolbens 14. Ebenso ist die Wirkfläche 330 etwa so groß wie oder deutlich größer als die Wirkfläche 19.^

Die Größen der Wirkflächen sind so aufeinander abgestimmt, dass das Verhältnis der Wirkfläche 18 zur Wirkfläche 19 am ersten Hydraulikkolben 14 gleich dem Verhältnis der Summe aus der Wirkfläche 29 am zweiten Hydraulikkolben 25 und der Wirkfläche 39 am dritten Hydraulikkolben 35 zur Summe aus den Wirkflächen 30 und 40 am zweiten und dritten Hydraulikkolben und gleich dem Verhältnis der Wirkfläche 39 zur Wirkfläche 40 am dritten Hydraulikkolben 35 ist.

Die Kolbenstangen 26 und 36 sind an ihren Enden außerhalb des Gehäuses 13 an einer gemeinsamen Platte 42 befestigt und dadurch in ihrer relativen Lage zueinander starr. Der zweite Hydraulikkolben 25 und der dritte Hydraulikkolben 35 werden also jeweils gemeinsam um denselben Weg verschoben.

Dazu dient eine elektromotorische Antriebseinheit 45, die einen elektrischen Servomotor 46, der in seiner Drehrichtung umkehrbar ist und dessen Drehzahl variabel ist, und einen Gewindetriebe umfasst, der eine Kugelrollspindel 47 und eine Spindelmutter 48 aufweist. Der Elektromotor 46 ist seitlich an dem Gehäuse 13 befestigt, wobei seine Achse parallel zu den Kolbenstangen 26 und 36 ausgerichtet ist. Auf der Welle des Elektromotors sitzt verdrehsicher ein Antriebsritzel 49, von dem über einen Zahnriemen 50 ein Abtriebsritzel 51 angetrieben werden kann, das fest an ein Ende der Kugelrollspindel 47 angebaut ist. Diese befindet sich genau in der Achse des zweiten Hydraulikkolbens 25 und ragt in die hohl ausgebildete zweite Kolbenstange 26 hinein. Dabei geht sie durch die Spindelmutter 48 hindurch, die in einer zentrischen Öffnung der Platte 42 verdrehsicher befestigt ist. Das Abtriebsritzel 51 und mit ihm die Kugelrollspindel 47 sind in Achsrichtung über Wälzlager 52 abgestützt und in ihrer axialen Position fixiert. Wenn die Kugelrollspindel gedreht wird, bewegt sich also die durch die Hydraulikkolben 35a, 35b und die Kolbenstangen 36a, 36b verdrehgesicherte Spindelmutter 48 in axialer Richtung und nimmt dabei die Hydraulikkolben 25 und 35 mit.

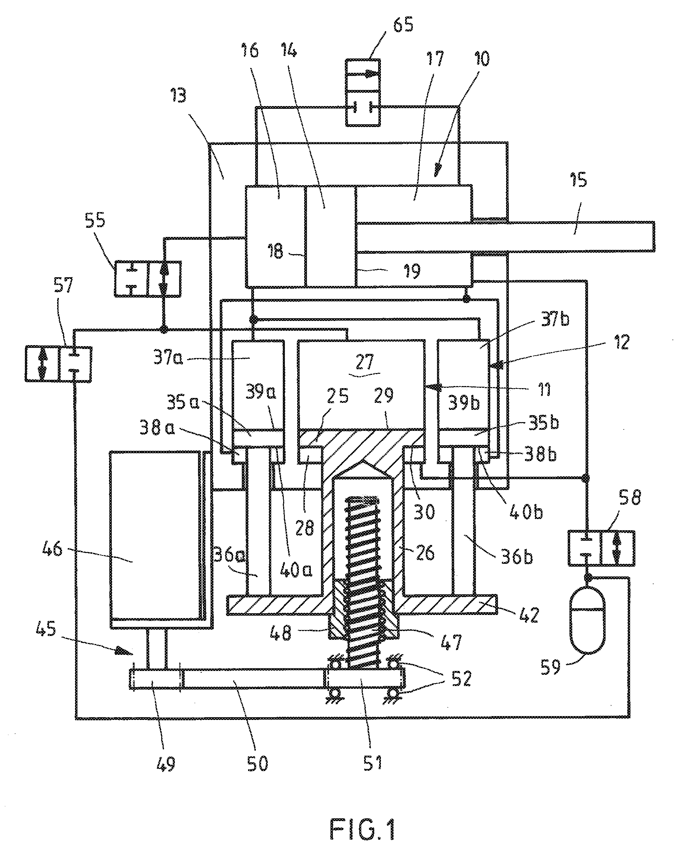

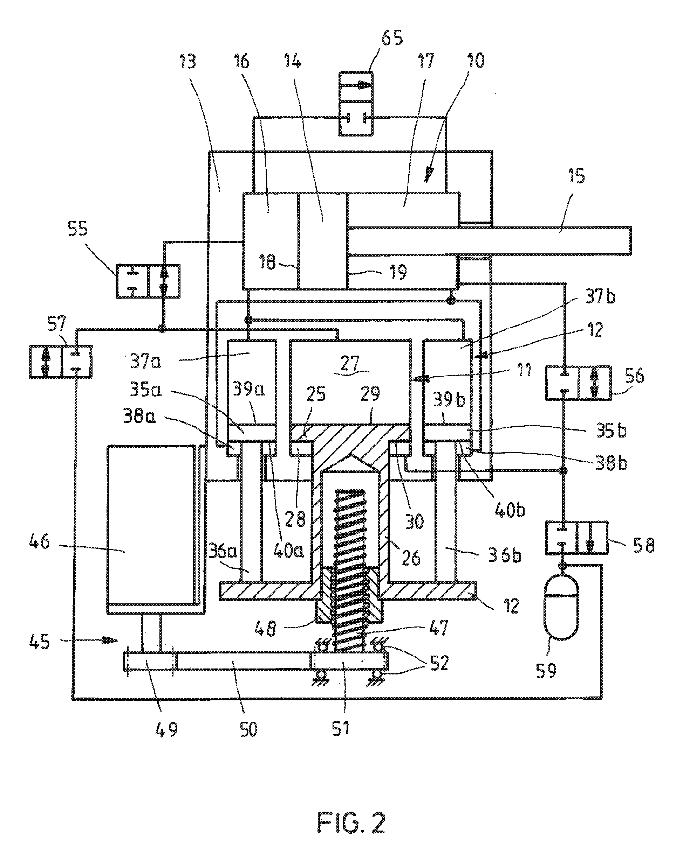

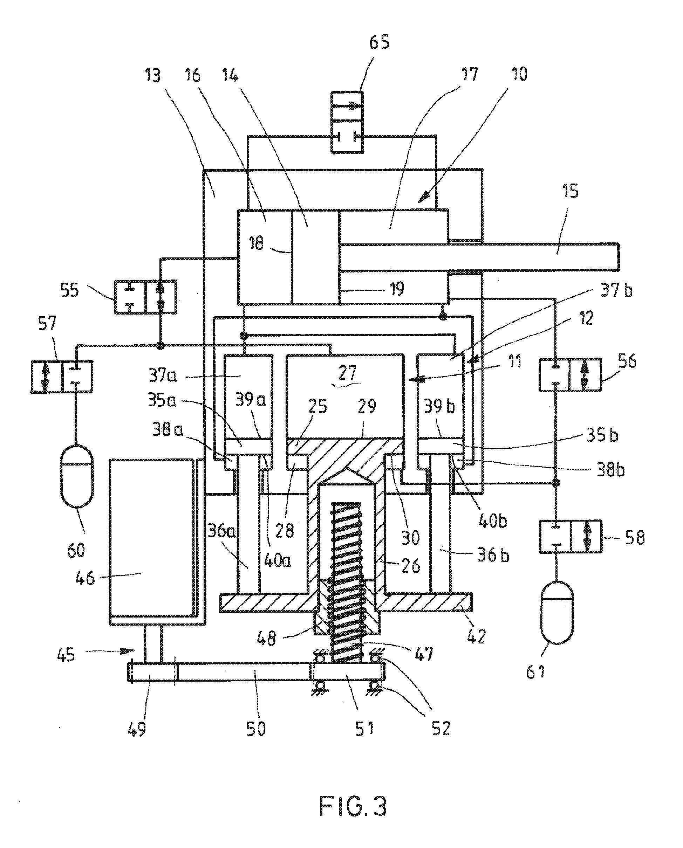

Bei allen drei Ausführungsbeispielen sind der Zylinderraum 37 und der Zylinderraum 16 einerseits und der Zylinderraum 38 der dritten Kolben-Zylinder-Einheit 12 und der Zylinderraum 17 der ersten Kolben-Zylinder-Einheit andererseits fluidisch offen zueinander, so dass zwischen ihnen in jeder Betriebsphase ungehindert ein Austausch von Druckflüssigkeit stattfinden kann. Auch zwischen den Zylinderräumen 16 und 27 und den Zylinderräumen 17 und 28 der Kolben-Zylinder-Einheiten 10 und 11 kann Druckflüssigkeit hin und her fließen. Allerdings ist in den Strömungspfad zwischen den Zylinderräumen 16 und 27 bei allen drei Ausführungsbeispielen ein 2/2-Wegeventil 55 eingefügt, mit dem die Verbindung zwischen den Zylinderräumen 16 und 27 abgesperrt werden kann. Die fluidische Verbindung zwischen den Zylinderräumen 17 und 28 ist bei dem Ausführungsbeispiel nach Figur 1 in jeder Betriebsphase offen, so hier die drei ringförmigen Zylinderräume 17, 28 und 38 der drei Kolben-Zylinder-Einheit immer einen einzigen Druckraum bilden. Bei den Ausführungsbeispielen nach den Figuren 2 und 3 können die Zylinderräume 17 und 28 durch ein 2/2 Wegeventil 56 gegeneinander abgesperrt werden, so dass hier nur die ringförmigen Zylinderräume 17 und 38 immer miteinander verbunden sind.

Bei allen drei Ausführungsbeispielen sind zwei weitere 2/2 Wegeventile 57 und 58 vorhanden, wobei das 2/2 Wegeventil 59 mit einem Anschluss an den Zylinderraum 27 und das 2/2 Wegeventil mit einem Anschluss an den Zylinderraum 28 der zweiten Kolben-Zylinder-Einheit 11 angeschlossen ist. Bei den beiden Ausführungsbeispielen nach den Figuren 1 und 2 kann des Wegeventil 57 den Zylinderraum 27 und das Wegeventil 58 den Zylinderraum 28 zu einem Hydrospeicher 59 hin absperren oder mit diesem verbinden.

Bei dem Ausführungsbeispiel nach Figur 3 sind zwei Hydrospeicher 60 und 61 vorhanden, von denen nur der Hydrospeicher 60 über das Wegeventil 57 mit dem Zylinderraum 27 und nur der Hydrospeicher 61 über das Wegeventil 58 mit dem Zylinderraum 28 der zweiten Kolben-Zylinder-Einheit 11 verbunden werden kann.

Bei allen drei Ausführungsbeispielen sind die beiden Zylinderräume 16 und 17 der ersten Kolben-Zylinder-Einheit 10 über ein 2/2 Wegeventil 65 fluidisch miteinander verbindbar. In der Ruhestellung dieses Wegeventils sind die beiden Zylinderräume gegeneinander abgesperrt. Mit hilfe des Wegeventils sowie der weiteren vorhandenen Wegeventile 55 bzw. 55 und 56 können die kolbenstangenseitigen Zylinderräume 28 und 38 mit den kolbenstangenabseitigen Zylinderräumen 27 und 37 der Kolben-Zylinder-Einheiten 11 und 12 miteinander verbunden werden, um eine Drift der Hydraulikkolben aufgrund innerer Leckage auszugleichen.

In Figur 1 ist die dort dargestellte Antriebsvorrichtung für die Formtragplatte in einem Zustand gezeigt, in dem die Form einer Blasformmaschine geöffnet ist. Soll nun die Form im Eilhub geschlossen werden, so wird der Elektromotor 46 so an gesteuert, dass sich das Abtriebsritzel 51 und die Kugelrollspindel 47 so drehen, dass die Spindelmutter von dem Abtriebsritzel wegwandert. Das Wegeventil 55 ist offen, die Wegeventile 57 und 58 sind geschlossen. Die Hydraulikkolben 25 und 35 verschieben sich also im Sinne einer Verkleinerung der Zylinderräume 27 und 37 und verdrängen Druckflüssigkeit über das offene Ventil 55 in den Zylinderraum 16 der ersten Kolben-Zylinder-Einheit 10. Die Kolbenstange 15 fährt aus. Die aus dem ringförmigen Zylinderraum 17 ausgeschobene Druckflüssigkeitsmenge wird von den Zylinderräumen 28 und 38 aufgenommen, die sich wegen der geschilderten Wirkflächenverhältnisse um dasselbe Volumen vergrößern, um das sich der Zylinderraum 17 verkleinert. Der Widerstand, den die Formtragplatte einer Bewegung entgegensetzt, ist dabei gering, so dass der Druck in den Zylinderräumen 16, 27 und 37 und die Belastung des Gewindetriebs trotz der großen Gesamtwirkfläche 29, 39 klein ist.

Für das Zuhalten der Form oder für einen Abquetschvorgang muss eine größere Kraft auf den Hydraulikkolben 14 ausgeübt werden. Während dieses Krafthubs, in dem der Hydraulikkolben 14 allenfalls nur noch einen kleinen Weg zurücklegt, sind die Ventile 57 und 58 offen und das Ventil 55 geschlossen. In den Zylinderräumen 17, 27, 28 und 38 herrscht nun ein niedriger Druck, der sich aus dem Zustand des Hydrospeichers 59, der ein Niederdruckspeicher ist, ergibt. Während der weiteren Verschiebung der Platte 42 im Krafthub wird somit außer dem Hydraulikkolben 35 auch der Hydraulikkolben 25 mitgenommen. Im Zylinderraum 27 baut sich jedoch kein hoher Druck auf. Der hohe Druck steht nur an der Wirkfläche 39 des Hydraulikkolbens 39 an, erzeugt dort nur eine relativ geringe Kraft und belastet deshalb den Gewindetrieb nicht übermäßig.

Zum Rückzug der Formtragplatte wird die Drehrichtung des Elektromotors 46 umgekehrt. Nach einer Dekompressionsphase werden die Wegeventile 57 und 58 geschlossen und das Wegeventil 55 geöffnet. Aus den Zylinderräumen 28 und 38 ausgeschobene Druckflüssigkeit wird in den Zylinderraum 17 gefördert. Die aus dem Zylinderraum 16 verdrängte Druckflüssigkeit wird von den Zylinderräumen 27 und 37 aufgenommen.

Da in den einzelnen Betriebsphasen Druckdifferenzen zwischen den kolbenstangenseitigen und kolbenstangenabseitigen Zylinderräume bestehen, tritt über die Hydraulikkolben Leckage auf, so dass die Hydraulikkolben 25 und 35 bezüglich des Hydraulikkolben 14 driften. Bei dem Ausführungsbeispiel, bei dem der Hydraulikkolben 14 ohne hydraulische Einspannung verfahren wird, kann die Drift je nach Größe der Druckdifferenzen und Länge der einzelnen Betriebsphasen in die eine oder in die andere Richtung gehen. Diese innere Leckage muss ab und zu ausgeglichen werden. Dazu wird zunächst bei offenem Wegeventil 55 und gesperrten Wegeventilen 57 und 58 der Hydraulikkolben 14 durch Verschieben der Hydraulikkolben 25 und 35 in eine bestimmte Position, in der er vorzugsweise an einem Anschlag anliegt, gebracht. Dann werden die Wegeventile 57 und 58 geöffnet und im Anschluss bei Stillstand des Hydraulikkolbens 14 die Hydraulikkolben 25 und 35 in die Position verschoben, die der Position des Hydraulikkolbens 14 entspricht. Dabei wird je nachdem, in welche Richtung vorher die Drift stattgefunden hat, Druckflüssigkeit in den Hydrospeicher 59 verdrängt oder dem Hydrospeicher entnommen.

Das Wegeventil 65 ist bei dem Ausführungsbeispiel nach Figur 1 für den Leckageausgleich an sich nicht notwendig.

Die in Figur 2 dargestellte Antriebsvorrichtung ist ebenfalls in einem Zustand gezeigt, in dem die Form einer Blasformmaschine geöffnet ist. Im Unterschied zum Ausführungsbeispiel nach Figur 1 ist hier jedoch ein Betrieb unter hydraulischer Einspannung vorgesehen. Das heißt, dass auch ohne die Einwirkung äußerer Kräfte in den Zylinderräumen schon ein gewisser Druck ansteht. Dabei ist der Druck in den kolbenstangenseitigen Zylinderräumen größer als in den kolbenstangenabseitigen Zylinderräumen. Dies ergibt sich aus den unterschiedlich gro-ßen Wirkflächen und der Forderung nach einem Kräftegleichgewicht an den Hydraulikkolben beim Fehlen einer äußeren Last. Sind zum Beispiel die Wirkflächen 18, 29 und 39 in Summe doppelt so groß wie die Wirkflächen 19, 30 und 40 (Flächenverhältnis 2:1) so ist der Druck in den kolbenstangenseitigen Zylinderräumen doppelt so groß wie in den anderen Zylinderräumen, zum Beispiel 20 bar in den einen Zylinderräumen und 40 bar in den anderen Zylinderräumen. Der Hydrospeicher sei auf den in den kolbenstangenabseitigen Einspanndruck aufgeladen.

Im Eilhub sind die Wegeventile 55 und 56 geöffnet und die Wegeventile 57 und 58 gesperrt. Die Hydraulikkolben 25 und 35 fördern gemeinsam Druckflüssigkeit aus den Zylinderräumen 27 und 37 in den Zylinderraum 16. Dabei ist die Druckdifferenz zwischen den Zylinderräumen entsprechend der geringen Kraft, die zum Verschieben der Formtragplatte notwendig ist, leicht vergrößert. Im Krafthub sind die Wegeventile 55 und 56 gesperrt und die Wegeventile 57 und 58 geöffnet. Jetzt fördert nur noch der Hydraulikkolben 39 in den Zylinderraum 16. Der Hydraulikkolben 25 fördert die Differenzmenge zwischen seinen Zylinderräumen 27 und 28 in den Hydrospeicher 59. Dabei steigt der Druck in den Zylinderräumen 16 und 37 auf einen hohen Wert an. Der Druck in den kolbenstangenseitigen Zylinderräumen fällt ab, da der Hydraulikkolben 39 schon allein zur Kompression der Druckflüssigkeit in den Zylinderräumen 16 und 37 einen mit einer Vergrößerung des Zylinderraums einhergehenden Weg zurücklegen muss.

Zum Rückzug der Formtragplatte wird die Drehrichtung des Elektromotors 46 umgekehrt. In der Dekompressionsphase sind die Wegeventile 55 und 56 noch geschlossen und die Wegeventile 57 und 58 noch offen. Am Ende der Dekompressionsphase stehen in den Zylinderräumen die Einspanndrücke ohne äußere Last an, also wie oben angeben 20 bar und 40 bar an. Nun wird zunächst das Wegeventil 58 geschlossen, so dass der Zylinderraum 28 verschlossen ist. Bei einer anschließenden Verschiebung in Richtung "Ausfahren der Kolbenstange 26 wird der Zylinderraum verkleinert, so dass der Druck in ihm ansteigt. In den Zylinderraum 27 strömt Druckflüssigkeit aus dem Hydrospeicher 59 nach. Sind im Zylinderraum 28 40 bar erreicht, wird das Wegeventil 57 gesperrt. Die Wegeventile 55 und 56 werden geöffnet. Anschließend erfolgt der Rückhub im Eilgang und mit Einspannung.

Bei dem eingespannten System nach Figur 2 wird über die Zeit eine Leckage von den kolbenstangenseitigen Zylinderräumen über die Hydraulikkolben in die kolbenstangenabseitigen Zylinderräumen auftreten, so dass die Kolbenstangen 26 und 36 allmählich nach außen driften. Zum Ausgleich der Leckage wird der Hydraulikkolben 14 bei geöffneten Wegeventilen 55 und 56 und geschlossenen Wegeventilen 57 und 58 gegen einen Anschlag gefahren. Dann wird das Wegeventil 65 geöffnet. Die Hydraulikkolben 25 und 35 werden im Sinne eines "Einfahrens der Kolbenstangen "bewegt, bis die zur Position des Hydraulikkolbens 14 gehörende Position erreicht ist. Die Position der Hydraulikkolben 25 und 35 wird direkt am Elektromotor durch einen eingebauten Absolutgeber erfasst.

Bei dem Ausführungsbeispiel nach Figur 3 sei der Hydrospeicher 60 auf den niedrigen Einspanndruck von 20 bar und der Hydrospeicher 61 auf den hohen Einspanndruck von 61 bar aufgeladen.

Auch bei dem Ausführungsbeispiel nach Figur 3 sind im Eilhub die Wegeventile 55 und 56 geöffnet und die Wegeventile 57 und 58 gesperrt. Die Hydraulikkolben 25 und 35 fördern gemeinsam Druckflüssigkeit aus den Zylinderräumen 27 und 37 in den Zylinderraum 16. Dabei ist die Druckdifferenz zwischen den Zylinderräumen entsprechend der geringen Kraft, die zum Verschieben der Formtragplatte notwendig ist, leicht vergrößert. Bei einem Halt der Formtragplatte vor dem Krafthub stellen sich wieder die Einspanndrücke von 20 bar und 40 bar in den Zylinderräumen ein. Werden nun die für den Krafthub die Wegeventile 55 und 56 gesperrt und die Wegeventile 57 und 58 geöffnet, so fließt zunächst noch kein Druckmittel zur Kompression oder Dekompression zwischen den Zylinderräumen 27 und 28 und den Hydrospeichern 60 und 61. Im anschließenden Krafthub fördert nur noch der Hydraulikkolben 39 in den Zylinderraum 16. Der Hydraulikkolben 25 fördert aus seinem Zylinderraum 27 in den Hydrospeicher 60, während dem Zylinderraum 28 Druckflüssigkeit aus dem Hydrospeicher 61 zufließt.

Zum Rückzug der Formtragplatte wird die Drehrichtung des Elektromotors 46 umgekehrt. In der Dekompressionsphase sind die Wegeventile 55 und 56 noch geschlossen und die Wegeventile 57 und 58 noch offen. Am Ende der Dekompressionsphase stehen in allen Zylinderräumen die Einspanndrücke ohne äußere Last an, also wie oben angeben 20 bar und 40 bar an. Nun werden die Wegeventile 57 und 58 gesperrt und die Wegeventile 55 und 56 geöffnet. Anschließend erfolgt der Rückhub im Eilgang und mit Einspannung.

Zum Ausgleich von Leckage wird auch bei dem Ausführungsbeispiel nach Figur 3 der Hydraulikkolben 14 bei geöffneten Wegeventilen 55 und 56 und geschlossenen Wegeventilen 57 und 58 gegen einen Anschlag gefahren. Dann werden zusätzlich die Wegeventile 57 und 58 und das Wegeventil 65 geöffnet. Die Hydraulikkolben 25 und 35 werden im Sinne eines "Einfahrens der Kolbenstangen " bewegt, bis die zur Position des Hydraulikkolbens 14 gehörende Position erreicht ist. Die Position der Hydraulikkolben 25 und 35 wird direkt am Elektromotor durch einen eingebauten Absolutgeber erfasst.

Im Übrigen hat eine hydraulische Antriebsvorrichtung der bezeichneten Art insbesondere folgende Vorteile:
Sie besitzt einen sehr guten Wirkungsgrad.
Sie ist gegenüber einer hydraulischen Kraftübertragung mit Hydropumpe geräuscharm, da keine Umsteuervorgänge stattfinden.
Der Verschleiß ist gering, da im Vergleich mit einer Hydropumpe nur geringe Relativgeschwindigkeiten auftreten.
Es ist leicht ein Betrieb mit Wasser als Druckflüssigkeit möglich, weil keine Hydropumpe verwendet wird, die ein Fluid mit guten Schmiereigenschaften verlangt. Wegen der höheren Elastizität einer Druckflüssigkeit gegenüber einem Metall werden hochfrequente Schwingungen (Stöße) gedämpft und so die Lebensdauer der Mechanik (Zahnstange, Gewindetrieb, usw.) verlängert.
Es ist ein modularer Aufbau möglich, weil durch die Verwendung unterschiedlich vieler gleichartiger Eingangskolben verschiedene gewünschte Geschwindigkeiten eines Ausgangskolbens erhalten werden können.

## Patentansprüche

1. Antriebsvorrichtung, insbesondere für ein bewegbares Bauteil an einer Kunststoffspritzgießmaschine oder einer Blasformmaschine,
mit einer ein geradlinig bewegbares Ausgangselement (47) einer insbesondere elektromotorischen Antriebseinheit (45) und
mit einer ersten Kolben-Zylinder-Einheit (10), die einen ersten Hydraulikkolben (14) aufweist, der mit einer ersten Wirkfläche (18) einen mit Druckflüssigkeit gefüllten ersten Zylinderraum (16) begrenzt und in der Kraftkette zwischen dem Ausgangselement (47) und dem bewegbaren Bauteil liegt,
mit einer zweiten Kolben-Zylinder-Einheit (11), die einen zweiten Hydraulikkolben (25) aufweist, der mit einer zweiten Wirkfläche (29) einen zweiten mit Druckflüssigkeit gefüllten Zylinderraum (27) begrenzt,
mit einer dritten Kolben-Zylinder-Einheit (12), die einen dritten Hydraulikkolben (35) aufweist, der mit einer dritten Wirkfläche (39) einen dritten mit Druckflüssigkeit gefüllten Zylinderraum (37) begrenzt und dessen Wirkfläche (39) wesentlich kleiner als die erste Wirkfläche (18) ist,
mit einem Ventil (55), mit der eine fluidische Verbindung zwischen dem zweiten Zylinderraum (27) und dem ersten Zylinderraum (16) steuerbar ist,
wobei für einen Stellhub des bewegbaren Bauteils bei offenem Ventil (55) Druckflüssigkeit aus dem zweiten Zylinderraum (27) und dem dritten Zylinderraum (37) in den ersten Zylinderraum (16) und für die Ausübung einer großen Kraft auf das bewegbare Bauteil (Krafthub) bei geschlossenem Ventil (55) Druckflüssigkeit nur aus dem dritten Zylinderraum (37) in den ersten Zylinderraum (16) verdrängt wird,
**dadurch gekennzeichnet, dass** ein Druckflüssigkeitsausgleichsbehälter (59; 60) vorhanden ist und dass mit einem Ventil (57) eine fluidische Verbindung zwischen dem zweiten Zylinderraum (27) und dem Druckflüssigkeitsausgleichsbehälter (59; 60) steuerbar ist.

2. Antriebsvorrichtung nach Anspruch 1, **dadurch gekennzeichnet, dass** eine Kolben-Zylinder-Einheit (12) durch mehrere parallel zueinander angeordnete Teileinheiten gebildet ist.

3. Antriebsvorrichtung nach einem vorhergehenden Anspruch, **dadurch gekennzeichnet, dass** der erste Hydraulikkolben (14) ein Differenzkolben mit einem der ersten Wirkfläche (18) abgelegenen ersten ringförmigen Zylinderraum (17) und der zweite Hydraulikkolben (25) ein Differenzkolben mit einem der zweiten Wirkfläche (29) abgelegenen zweiten ringförmigen Zylinderraum (28) ist.

4. Antriebsvorrichtung nach Anspruch 3, **dadurch gekennzeichnet, dass** der dritte Hydraulikkolben (35) ein Differenzkolben mit einem der dritten Wirkfläche (39) abgelegenen dritten ringförmigen Zylinderraum (38) ist und dass der dritte ringförmige Zylinderraum (38) zum ersten ringförmigen Zylinderraum (17) hin fluidisch offen ist.

5. Antriebsvorrichtung nach den Ansprüchen 3 und 4, **dadurch gekennzeichnet, dass** das Verhältnis der ersten Wirkfläche (18) zur an den ersten ringförmigen Zylinderraum (17) angrenzenden Wirkfläche (19) des ersten Hydraulikkolbens (14) gleich dem Verhältnis der Summe aus der zweiten Wirkfläche (29) und der dritten Wirkfläche (39) zur Summe der Wirkflächen (30, 40), die an den zweiten und an den dritten ringförmigen Zylinderraum (28, 38) angrenzen, und gleich dem Verhältnis der dritten Wirkfläche (39) zur an den dritten ringförmigen Zylinderraum (38) angrenzenden Wirkfläche (40) ist.

6. Antriebsvorrichtung nach Anspruch 3, 4 oder 5, **dadurch gekennzeichnet, dass** der zweite ringförmige Zylinderraum (28) über ein Ventil (58) mit einem Druckflüssigkeitsausgleichsbehälter (59; 61) verbindbar ist.

7. Antriebsvorrichtung nach Anspruch 6, **dadurch gekennzeichnet, dass** der zweite Zylinderraum (27) über ein Ventil (57) mit einem ersten Druckflüssigkeitsausgleichsbehälter (60) und der zweite, ringförmige Zylinderraum (28) über ein Ventil (58) mit einem zweiten Druckflüssigkeitsausgleichsbehälter (61) verbindbar ist.

8. Antriebsvorrichtung nach einem vorhergehenden Anspruch, **dadurch gekennzeichnet, dass** vorhandene Druckflüssigkeitsausgleichsbehälter (59; 60,61) als Hydrospeicher ausgebildet sind.

9. Antriebsvorrichtung nach einem vorhergehenden Anspruch, **dadurch gekennzeichnet, dass** zwischen dem ersten ringförmigen Zylinderraum (17) und dem zweiten ringförmigen Zylinderraum (28) ein Ventil (56) angeordnet ist, mit dem die beiden Zylinderräume (17, 28) gegeneinander absperrbar sind.

10. Antriebsvorrichtung nach einem vorhergehenden Anspruch, **dadurch gekennzeichnet, dass** wenigstens ein Teil der Fluidverbindungen durch 2/2 Wegeventile (55, 56, 57, 58) gesteuert werden.

11. Antriebsvorrichtung nach einem vorhergehenden Anspruch, **dadurch gekennzeichnet, dass** über eine Ventilanordnung (55, 56, 65) die beiden Zylinderräume (27, 28) zu den beiden Seiten des zweiten Hydraulikkolbens (25) und die beiden Zylinderräume (37, 38) zu den beiden Seiten des dritten Hydraulikkolbens (35) fluidisch miteinander verbindbar sind.
